# EUROPEAN PATENT APPLICATION

(11) **EP 4 318 644 A2**
(43) Date of publication of application: **07.02.2024**
(21) Application number: 23189314.0
(22) Date of filing: 02.08.2023
(51) Int. Cl.: H01M 4/131, H01M 4/133, H01M 4/134, H01M 4/36, H01M 4/485, H01M 10/0525, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 05.08.2022 KR 20220098073
(71) Applicant: Samsung SDI Co., Ltd., Yongin-si, Gyeonggi-do 17084 (KR); IUCF-HYU (INDUSTRY-UNIVERSITY COOPERATION FOUNDATION HANYANG UNIVERSITY), Seoul 04763 (KR)
(72) Inventor: JUNG, Hyeseung, 17084 Yongin-si (KR); KIM, Soochan, 17084 Yongin-si (KR); CHO, Chaewoong, 17084 Yongin-si (KR); MYEONG, Seung Cheol, 04761 Seoul (KR); SONG, Taeseup, 03180 Seoul (KR)
(74) Representative: Marks & Clerk LLP

(57) **Abstract**

Disclosed are a negative electrode for a rechargeable lithium battery and a rechargeable lithium battery, and the negative electrode includes lithium titanium oxide having an aspect ratio of about 10:1 to about 2:1, a needle-type carbon-based material and a negative active material.

## Description

### BACKGROUND OF THE INVENTION

### (a) Field of the Invention

It relates to a negative electrode for a rechargeable lithium battery and a rechargeable lithium battery including the same.

### (b) Description of the Related Art

Recently, the rapid supplement of electronic devices such as mobile phones, laptop computers, and electric vehicles using batteries require surprising increases in demand for rechargeable batteries with relatively high capacity and lighter weight. Particularly, a rechargeable lithium battery has recently drawn attention as a driving power source for portable devices, as it has lighter weight and high energy density. Accordingly, researches for improving the performance of the rechargeable lithium are actively studied.

A rechargeable lithium battery includes a positive electrode and a negative electrode which may include an active material being capable of intercalating and deintercalating lithium ions, and an electrolyte, and generates electrical energy due to an oxidation and reduction reaction when lithium ions are intercalated and deintercalated into the positive electrode and the negative electrode.

As for a positive active material of a rechargeable lithium battery, transition metal compounds such as lithium cobalt oxides, lithium nickel oxides, and lithium manganese oxide are mainly used.

As the negative active material, a carbon-based material such as a crystalline carbon material or an amorphous carbonaceous material, or silicon-based material may be used.

Crystalline carbon such as graphite has been mainly used as a negative active material, but the demands for batteries with high energy density and high capacity are recently required which leads to mainly use of a negative active material in which crystalline carbon and a silicon-based active material are mixed. However, as the amount of silicon increases in the negative electrode, a conducting network due to contraction and expansion of silicon during charging and discharging is broken and thus, the side reaction is increased.

In addition, the occurrence of cracks in silicon due to contraction and expansion of silicon leads to the trapping of lithium ions, and the volume expansion causes to decrease in lithium ions contacts, which leads to increase charge transfer resistance, Rct, which is not appropriate.

### SUMMARY OF THE INVENTION

One embodiment provides a negative electrode for a rechargeable lithium battery, exhibiting excellent ion conductivity and electrical conductivity and excellent high-rate characteristics.

Another embodiment provides a rechargeable lithium battery including the negative electrode.

One embodiment provides a negative electrode for a rechargeable lithium battery including lithium titanium oxide with an aspect ratio of about 10:1 to about 2:1; a needle-type carbon-based material; and a negative active material.

The lithium titanium oxide may be represented by Chemical Formula 1.

[Chemical Formula 1] Li₄₊ₓTi_{y}M_{z}Ot

(in Chemical Formula 1, 0≤x≤3, 1≤y≤5, 0≤z≤3, 3≤t≤12,
M is selected from Mg, La, Tb, Gd, Ce, Pr, Nd, Sm, Ba, Sr, Ca, or combinations thereof.)

The needle-type carbon-based material may include carbon nanotube, carbon nano fiber, or combinations thereof.

The needle-type carbon-based material may have an average length of about 0.5 µm to about 20 µm.

A mixing ratio of lithium titanium oxide and the needle-type carbon-based material may be about 2:1 to about 199:1 by weight ratio.

A mixing ratio of lithium titanium oxide and the needle-type carbon-based material may be about 2:1 to about 100:1 by weight ratio.

The negative active material may include a silicon-based active material, a carbon-based active material, or combinations thereof.

According to another embodiment, a rechargeable lithium battery includes the negative electrode; a positive electrode, and an electrolyte.

At least some of the above and other features of the invention are set out in the claims.

The negative electrode for the rechargeable lithium battery according to one embodiment may have excellent ion conductivity and electrical conductivity, and may have excellent high-rate charge and discharge characteristics.

### BRIEF DESCRIPTION OF THE DRAWINGS

FIG. 1 is a schematic diagram showing a rechargeable lithium battery according to one embodiment.
FIG. 2 is a graph showing charge transfer resistance (Rct) and charge rate capability of the battery according to Example 1 and Comparative Examples 1 and 2.

### DETAILED DESCRIPTION OF THE INVENTION

Hereinafter, embodiments of the present invention are described in detail. However, these embodiments are merely examples, the present invention is not limited thereto, and the present invention is defined by the scope of claims.

A negative electrode for a rechargeable lithium battery according to one embodiment includes lithium titanium oxide with an aspect ratio of about 10:1 to about 2:1; a needle-type carbon-based material; and a negative active material.

In the specification, an aspect ratio may be a ratio of a length of the longer axis and a length of the shorter axis of lithium titanium oxide, that is, length of longer axis: length of shorter axis. The aspect ratio may refer to the average aspect ratio and may be determined from SEM images.

The aspect ratio of lithium titanium oxide may be about 10:1 to about 2:1, about 8:1 to about 2:1, or about 6: 1 to about 2:1.

Lithium titanium oxides having aspect ratios within the above ranges may be obtained by methods well known to those skilled in the art. For example, the aspect ratio may be adjusted by controlling the temperature during the preparation of lithium titanium oxide.

When the aspect ratio of lithium titanium oxide is satisfied within the range, a conductive network may be well formed in the negative active material layer, thereby reducing charge transfer resistance, Rct. If the aspect ratio of lithium titanium oxide is out of the range, for example, the length of the longer axis is too long to be a ratio of the length of the longer axis:the length of the shorter axis of more than 10:1, lithium titanium oxide may be totally and non-uniformly distributed the negative active material layer.

If length of the longer axis is too short, for example, a ratio of longer axis length:shorter axis length of less than 2:1, the length of the longer axis is short relative to size of particles, so that it is difficult to form a conductive network between active materials.

As such, lithium titanium oxide according to one embodiment is in the form of fiber with a long axis and a short axis. Particle-type lithium titanium oxide without long axis and short axis may not provide the conductive network effects.

Lithium titanium oxide may be a compound represented by Chemical Formula 1.

[Chemical Formula 1] Li₄₊ₓTi_{y}M_{z}Ot

(in Chemical Formula 1, 0≤x≤3, 1 ≤y≤5, 0≤z≤3, 3≤t≤12,
M is selected from Mg, La, Tb, Gd, Ce, Pr, Nd, Sm, Ba, Sr, Ca, or combinations thereof.)

In one embodiment, the needle-type carbon-based material may include carbon nanotube, carbon nano fiber, or combinations thereof, or may be carbon nanotube. The carbon nanotube may be a single-walled carbon nanotube, a double-walled carbon nanotube, a multi-walled carbon nanotube, or combinations thereof.

Such a needle-type carbon-based material may be a fiber-type carbon-based material, which has a long length in the longitudinal direction rather than a particle-type, and the use of the needle-type carbon-based material together with lithium titanium oxide having the specific aspect ratio may improve the electrical conductivity, resulting in enhanced high-rate performances.

Instead of the needle-type carbon-based material, a sphere carbon-based material, for example, carbon black, denka black, and the like, may be unable to maintain the network when the contraction of Si during discharge causes a decrease in contacts between active materials, and thus, electrical conductivity may not be improved.

The needle-type carbon-based material may have an average length of about 0.5 µm to about 20 µm, about 0.7 µm to about 20 µm, about 1 µm to about 20 µm, about 1 µm to about 15 µm, or about 1 µm to about 10 µm. When the average length of the needle-type carbon-based material is within the range, it is possible to form the flexible conductive, so that active materials may be effectively contacted therewith even with a small amount thereof. In the specification, the length refers to the size of the longer axis. Needle-type carbon-based materials having an average length in the above ranges are available from commercial sources.

In one embodiment, the mixing ratio of lithium titanium oxide and the needle-type carbon-based material may be about 2:1 to about 199:1 by weight ratio, about 2:1 to about 100:1 by weight ratio, about 10:1 to about 100:1 by weight ratio, or about 20:1 to about 40:1 by weight ratio. When the mixing ratio of lithium titanium oxide and the needle-type carbon-based material is within the range, the decreases in the specific capacity due to low capacity of lithium titanium oxide may be more minimized and the cycle-life characteristics by using lithium titanium oxide may be more improved.

The negative active material may be a silicon-based active material, a carbon-based active material, or combinations thereof.

In one embodiment, the silicon-based negative active material may include silicon and carbon. The carbon may be a crystalline carbon or an amorphous carbon. The crystalline carbon may be natural graphite, artificial graphite, or combinations thereof. The amorphous carbon may be soft carbon, hard carbon, mesophase pitch carbide, sintered cokes, or combinations thereof.

The silicon-based negative active material may include the silicon-based material and the amorphous carbon, or may include the crystalline carbon, the silicon-based material, and the amorphous carbon. Herein, the silicon-based material may be silicon (Si) or silicon oxide (SiOₓ, 0<x<2).

When the silicon-based negative active material includes the silicon-based material and the amorphous carbon, the negative active material may be an agglomerated product of the silicon-based material and the amorphous carbon, or may include the silicon-based material and the amorphous carbon coated on the surface of the silicon-based material. Herein, the mixing ratio of the silicon-based material and amorphous carbon may be about 1:99 to about 60:40 by weight ratio.

Alternatively, when the silicon-based negative active material includes the crystalline carbon, the silicon-based material, and the amorphous carbon, it may include an agglomerated product in which the crystalline carbon and the silicon-based material are agglomerated, and an amorphous carbon coated thereon. Herein, the amount of the silicon-based material may be about 1 wt% to about 60 wt% based on total 100 wt%, of the silicon-based negative active material, or according to one embodiment, about 3 wt% to about 60 wt% based on the total 100 wt%, of the silicon-based negative active material. In addition, in the silicon-based negative active material, an amount of the amorphous carbon may be about 20 wt% to about 60 wt% based on 100 wt% of the silicon-based negative active material and an amount of the crystalline carbon may be about 20 wt% to about 60 wt% based on 100 wt% of the silicon-based negative active material.

The Si particle may have a particle diameter of about 10 nm to about 30 µm, and according to one embodiment, may be about 10 nm to about 1000 nm, or according to another embodiment, may be about 20 nm to about 150 nm. When the average particle diameter of the Si particle is within the range, the volume expansion caused during charge and discharge may be suppressed, and a breakage of the conductive path due to crushing of particle may be prevented.

In the specification, a particle diameter may refer to an average particle diameter of particles. Herein, the average particle diameter may mean a particle diameter (D50) by measuring cumulative volume. When a definition is not otherwise provided, such a particle diameter (D50) indicates an average particle diameter (D50) where a cumulative volume is about 50 volume% in a particle distribution.

The average particle diameter (D50) may be measured by a method well known to those skilled in the art, for example, by a particle size analyzer, or also by a transmission electron microscopic image or a scanning electron microscopic image. Alternatively, a dynamic light-scattering measurement device is used to perform a data analysis, and the number of particles is counted for each particle size range. From this, the average particle diameter (D50) value may be easily obtained through a calculation.

In the case of coating with amorphous carbon, a thickness of a coating layer of amorphous carbon may be about 5 nm to about 100 nm.

The carbon-based active material may be unspecified shaped, sheet, flake, spherical, or fiber shaped natural graphite or artificial graphite, and the amorphous carbon may be a soft carbon, a hard carbon, a mesophase pitch carbonization product, fired coke, and the like.

In the case of using the silicon-based active material and the carbon-based active material as the negative active material, a mixing ratio of the silicon-based active material and the carbon-based active material may be about 1:99 to 50:50 by weight ratio. More specifically, a mixing ratio of the silicon-based active material and the carbon-based active material may be about 5:95 to about 20:80 by weight ratio.

The negative electrode according to one embodiment includes a negative active material layer including lithium titanium oxide, the needle-type carbon-based material, and the negative active material, and a current collector supporting the negative active material layer.

An amount of lithium titanium oxide may be about 0.001 wt% to about 2 wt%, or about 0.5 wt% to about 1 wt% based on the total 100 wt%, of the negative active material layer. When the amount of lithium titanium oxide falls within the range, the conductive network may be effectively formed in the negative active material layer.

An amount of the needle-type carbon-based material may be about 0.001 wt% to about 0.1 wt%, or about 0.01 wt% to 0.05 wt% based on the total 100 wt%, of the negative active material layer. When the needle-type carbon-based material is within the range, the electrode conductivity may be effectively controlled in the negative active material layer, thereby more improving high-rate capability characteristics.

An amount of the negative active material may be about 90 wt% to about 99.899 wt% based on the total 100 wt%, of the negative active material layer.

In addition, the negative active material layer may include a binder. When the negative active material layer includes the binder, in the negative active material layer, an amount of the negative active material may be about 92.9 wt% to about 99 wt% based on the total 100 wt%, of the negative active material layer, an amount of lithium titanium oxide may be about 0.001 wt% to about 2 wt% based on the total 100 wt%, of the negative active material layer, an amount of the needle-type carbon-based material may be 0.001 wt% to 0.1 wt% based on the total 100 wt%, of the negative active material layer, and an amount of the binder may be about 1 wt% to about 5 wt% based on the total 100 wt%, of the negative active material layer.

The binder improves binding properties of negative active material particles with one another and with a current collector. The binder may be an aqueous binder, a non-aqueous binder, or a combination thereof.

The non-aqueous binder may be polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamideimide, polyimide, or combinations thereof.

The aqueous binder may be a styrene-butadiene rubber, an acrylated styrene-butadiene rubber (ABR), an acrylonitrile-butadiene rubber, an acryl rubber, a butyl rubber, an ethylene oxide-containing polymer, polyvinyl pyrrolidone, polypropylene, ethylenepropylene copolymer, polyepichlohroydrin, polyphosphazene, polyacrylonitrile, polystyrene, ethylenepropylenediene copolymer, polyvinylpyridine, chlorosulfonated polyethylene, latex, a polyester resin, an acryl resin, a phenol resin, an epoxy resin, polyvinyl alcohol, polyacrylic acid, or combinations thereof.

When the binder uses the aqueous binder, a cellulose-based compound may be further used to provide viscosity as a thickener. The cellulose-based compound may include one or more of carboxymethyl cellulose, hydroxypropyl methyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

In one embodiment, the negative electrode includes a current collector supporting the negative active material layer. The current collector may include one selected from a copper foil, a nickel foil, a stainless steel foil, a titanium foil, a nickel foam, a copper foam, a polymer substrate coated with a conductive metal, and a combination thereof, but is not limited thereof.

Another embodiment provides a rechargeable lithium battery including the negative electrode, a positive electrode, and an electrolyte.

The positive electrode includes a current collector and a positive active material layer formed on the current collector.

The positive active material may include lithiated intercalation compounds that reversibly intercalate and deintercalate lithium ions. Specifically, one or more composite oxides of a metal selected from cobalt, manganese, nickel, and a combination thereof, and lithium may be used. More specifically, the compounds represented by one of the following chemical formulae may be used. LiₐA_{1-b}X_{b}D₂ (0.90≤a≤1.8, 0≤b≤0.5); LiₐA_{1-b}X_{b}O_{2-c}D_{c} (0.90≤a≤1.8, 0≤b≤0.5, 0≤c≤0.05); LiₐE_{1-b}X_{b}O_{2-c}D_{c} (0.90≤a≤1.8, 0≤b≤0.5, 0≤c≤0.05); LiₐE_{2-b}X_{b}O_{4-c}D_{c} (0.90≤a≤1.8, 0≤b≤0.5, 0≤c≤0.05); LiₐNi_{1-b-c}Co_{b}X_{c}D_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α< 2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d0.1); LiₐNi_{b}Co_{c}Mn_{d}GₑO₂ (0.90≤a≤1.8, 0≤b≤0.9, 0≤c≤0.5, 0≤d≤0.5, 0≤e≤0.1); LiₐNi_{b}Co_{c}Al_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li(_{3-f})J₂(PO₄)₃ (0≤f≤2); Li(_{3-f})Fe₂(PO₄)₃ (0≤f≤2); LiₐFePO₄ (0.90≤a≤1.8).

In the above chemical formulae, A is selected from Ni, Co, Mn, or a combination thereof; X is selected from Al, Ni, Co, Mn, Cr, Fe, Mg, Sr, V, a rare earth element, or a combination thereof; D is selected from O, F, S, P, or a combination thereof; E is selected from Co, Mn, or a combination thereof; T is selected from F, S, P, or a combination thereof; G is selected from Al, Cr, Mn, Fe, Mg, La, Ce, Sr, V, or a combination thereof; Q is selected from Ti, Mo, Mn, or a combination thereof; Z is selected from Cr, V, Fe, Sc, Y, or a combination thereof; and J is selected from V, Cr, Mn, Co, Ni, Cu, or a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In an embodiment, the positive active material layers may further include a binder and a conductive material. Herein, the amounts of the binder and the conductive material may be respectively, about 1 wt% to about 5 wt% based on the total amount of the positive active material layer.

The binder improves binding properties of positive active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or a mixture thereof.

The current collector may be Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent may include cyclohexanone, and the like. The alcohol-based solvent may include ethyl alcohol, isopropyl alcohol, and the like, and examples of the aprotic solvent may include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance and it may be well understood to one of ordinary skill in the related art.

The carbonate-based solvent may suitably include a mixture of a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. Herein, the carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 2.

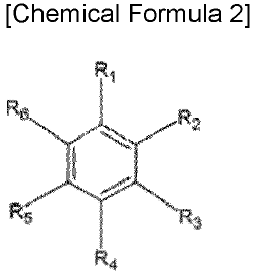

(In Chemical Formula 2, R₁ to R₆ are the same or different and are selected from hydrogen, a halogen, a C1 to C10 alkyl group, a haloalkyl group, or combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylethyl carbonate, vinylene carbonate, or an ethylene carbonate-based compound represented by Chemical Formula 3, as an additive for improving cycle life.

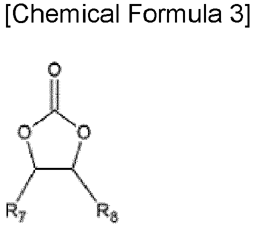

(In Chemical Formula 3, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.)

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. In the case of further using the additive for improving cycle life, an amount of the additive may be suitably controlled within an appropriate range.

The lithium salt dissolved in an organic solvent supplies a battery with lithium ions, basically operates the rechargeable lithium battery, and improves transportation of the lithium ions between positive and negative electrodes. Examples of the lithium salt may include one or two selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}S_{O2}), where x and y are a natural numbers, for example, an integer of about 1 to about 20, lithium difluoro(bisoxolato) phosphate), LiCl, Lil, LiB(C₂O₄)₂(lithium bis(oxalato) borate: LiBOB) and lithium difluoro(oxalato)borate (LiDFOB). A concentration of the lithium salt may range from about 0.1 M to about 2.0 M. When the lithium salt is included at the above concentration range, an electrolyte may have excellent performance and lithium ion mobility owing to optimal electrolyte conductivity and viscosity.

A separator may be disposed between the positive electrode and the negative electrode depending on a type of a rechargeable lithium battery. The separator may use polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

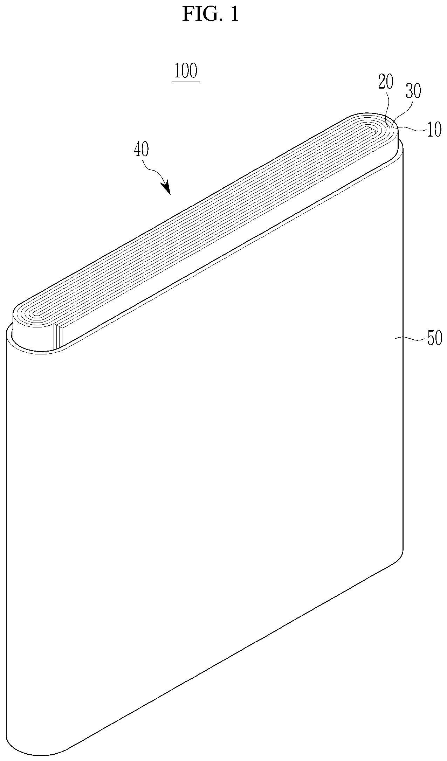

FIG.1 is an exploded perspective view of a rechargeable lithium battery according to an embodiment of the present invention. The rechargeable lithium battery according to an embodiment is illustrated as a prismatic battery but is not limited thereto and may include variously-shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

### (Example 1)

1 wt% of Li₄Ti₅O₁₂ with an aspect ratio of 4:1, 0.05 wt% of a multi-walled carbon nanotube (average length: 10 µm), 96.45 wt% of a mixed negative active material including graphite and a silicon-carbon composite (artificial graphite: 89 wt%, silicon-carbon composite 11 wt%), 1.0 wt% of carboxymethyl cellulose, and 1.5 wt% of a styrene butadiene rubber were mixed in a water solvent to prepare a negative active material slurry.

As the Si-C composite, a Si-carbon composite including a core including artificial graphite and silicon particles and a soft carbon coated on the surface of the core was used. The soft carbon coating layer had a thickness of 20 nm, and the silicon particles had an average particle diameter D50 of 100 nm.

A negative electrode was prepared by a general technique in which the negative active material slurry was coated on a Cu foil current collector, dried, and pressurized.

A half-cell was fabricated by using the negative electrode, a lithium metal counter electrode and an electrolyte. As the electrolyte, 1M LiPF₆ dissolved in ethylene carbonate and dimethyl carbonate (3:7 volume ratio), was used.

### (Example 2)

A negative electrode and a half-cell were prepared by the same procedure as in Example 1, except that Li₄Ti₅O₁₂ with an aspect ratio of 2:1 was used.

### (Example 3)

A negative electrode and a half-cell were prepared by the same procedure as in Example 1, except that Li₄Ti₅O₁₂ with an aspect ratio of 6:1 was used.

### (Example 4)

A negative electrode and a half-cell were prepared by the same procedure as in Example 1, except that Li₄Ti₅O₁₂ with an aspect ratio of 8:1 was used.

### (Example 5)

A negative electrode and a half-cell were prepared by the same procedure as in Example 1, except that Li₄Ti₅O₁₂ with an aspect ratio of 10:1 was used.

### (Comparative Example 1)

A negative electrode and a half-cell were prepared by the same procedure as in Example 1, except that 97.5 wt% of a mixed negative active material including graphite and a silicon-carbon composite (artificial graphite: 89 wt%, silicon-carbon composite 11 wt%), 1.0 wt% of carboxymethyl cellulose, and 1.5 wt% of a styrene butadiene rubber were mixed in a water solvent to prepare a negative active material slurry.

### (Comparative Example 2)

A negative electrode and a half-cell were prepared by the same procedure as in Example 1, except that 1 wt% of Li₄Ti₅O₁₂ with an aspect ratio of 4:1, 96.5 wt% of a mixed negative active material including graphite and a silicon-carbon composite (artificial graphite: 89 wt%, silicon-carbon composite 11 wt%), 1.0 wt% of carboxymethyl cellulose, and 1.5 wt% of a styrene butadiene rubber were mixed in a water solvent to prepare a negative active material slurry.

### (Comparative Example 3)

A negative electrode and a half-cell were prepared by the same procedure as in Example 1, except that Li₄Ti₅O₁₂ with an aspect ratio of 11:1 was used.

### (Comparative Example 4)

A negative electrode and a half-cell were prepared by the same procedure as in Example 1, except that 0.05 wt% of a multi-walled carbon nanotube (average length: 10 µm), 97.45 wt% of a mixed negative active material including graphite and a silicon-carbon composite (artificial graphite: 89 wt%, silicon-carbon composite 11 wt%), 1.0 wt% of carboxymethyl cellulose, and 1.5 wt% of a styrene butadiene rubber were used, and Li₄Ti₅O₁₂ was not used.

### (Example 6)

1 wt% of Li₄Ti₅O₁₂ with an aspect ratio of 4:1, 0.01 wt% of a multi-walled carbon nanotube (average length: 10 µm), 96.49 wt% of a mixed negative active material including graphite and a silicon-carbon composite (artificial graphite: 89 wt%, silicon-carbon composite 11 wt%), 1.0 wt% of carboxymethyl cellulose, and 1.5 wt% of a styrene butadiene rubber were mixed in a water solvent to prepare a negative active material slurry.

Using the negative active material slurry, a negative electrode and a half-cell were prepared by the same procedure as in Example 1.

### (Example 7)

1 wt% of Li₄Ti₅O₁₂ with an aspect ratio of 4:1, 0.1 wt% of a multi-walled carbon nanotube (average length: 10 µm), 96.4 wt% of a mixed negative active material including graphite and a silicon-carbon composite (artificial graphite: 89 wt%, silicon-carbon composite 11 wt%), 1.0 wt% of carboxymethyl cellulose, and 1.5 wt% of a styrene butadiene rubber were mixed in a water solvent to prepare a negative active material slurry.

Using the negative active material slurry, a negative electrode and a half-cell were prepared by the same procedure as in Example 1.

### (Example 8)

1 wt% of Li₄Ti₅O₁₂ with an aspect ratio of 4:1, 0.15 wt% of a multi-walled carbon nanotube (average length: 10 µm), 96.35 wt% of a mixed negative active material including graphite and a silicon-carbon composite (artificial graphite: 89 wt%, silicon-carbon composite 11 wt%), 1.0 wt% of carboxymethyl cellulose, and 1.5 wt% of a styrene butadiene rubber were mixed in a water solvent to prepare a negative active material slurry.

Using the negative active material slurry, a negative electrode and a half-cell were prepared by the same procedure as in Example 1.

### (Comparative Example 5)

A negative electrode and a half-cell were prepared by the same procedure as in Example 1, except that 1 wt% of a particle-type Li₄Ti₅O₁₂ with an aspect ratio of 1:1 was used.

### (Comparative Example 6)

A negative electrode and a half-cell were prepared by the same procedure as in Example 1, except that 0.5 wt% of carbon black which a particle-type carbon was used instead of a multi-walled carbon nanotube.

### Experimental Example 1) Evaluation of charge transfer resistance, Rct

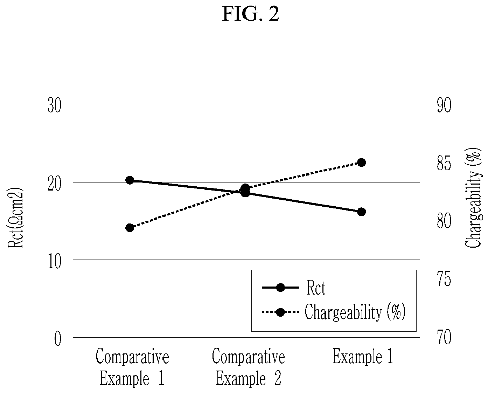

Regarding the half-cells according to Examples 1 to 8 and Comparative Examples 1 to 6, AC resistance was measured within the range of frequency of 10 kHz to 30 mHz using an EIS measurement device of VMP3 available from Biologic Science instruments. The measured resistance refers to the charge transfer resistance of the cell thin layer, and may be a resistance of a thin layer generated via the reaction of the electrolyte and interface/ side product. The results are shown in Table 1 and among these results, the results of Example 1, and Comparative Examples 1 and 2 are shown in FIG. 2.

As shown in FIG. 2, Example 1 exhibited lower charge transfer resistance than Comparative Examples 1 and 2, from which the excellent ion conductivity may be expected.

### Experimental Example 2) Evaluation of high-rate capability characteristic

The half-cells according to Examples 1 to 8 and Comparative Examples 1 to 6 were charged and discharged at 0.1C once, and charged and discharged at 0.33C once. A ratio of a 0.33C charge capacity relative to a 0.1C charge capacity was measured. The results are shown in Table 1. Among these results, the results of Example 1 and Comparative Examples 1 and 2 are shown in FIG. 2, as chargeability.

As shown in FIG. 2, Example 1 exhibited higher chargeability than Comparative Examples 1 and 2.

In Table 1, LTO refers to Li₄Ti₅O₁₂, and CNT refers to a multi-walled carbon nanotube.

**(Table 1)**

| | Aspect ratio of LTO | Amount of LTO (wt%) | Amount of CNT (wt%) | Mixing ratio of LTO:CNT (weight ratio) | R_{ct} (Ω·cm²) | Chargeabilty (%) |
|---|---|---|---|---|---|---|
| Example 1 | 4:1 | 1 | 0.05 | 20:1 | 15.0 | 90.1 |
| Example 2 | 2:1 | 1 | 0.05 | 20:1 | 16.2 | 88.9 |
| Example 3 | 6:1 | 1 | 0.05 | 20:1 | 16.2 | 86.8 |
| Example 4 | 8:1 | 1 | 0.05 | 20:1 | 16.0 | 86.0 |
| Example 5 | 10:1 | 1 | 0.05 | 20:1 | 16.7 | 87.1 |
| Comparative Example 1 | - | 0 | 0 | 0 | 20.2 | 75.0 |
| Comparative Example 2 | 4:1 | 1 | 0 | 0 | 19.1 | 79.5 |
| Comparative Example 3 | 11:1 | 1 | 0.05 | 20:1 | 17.3 | 83.8 |
| Comparative Example 4 | - | 0 | 0.05 | 0 | 18.8 | 83.7 |
| Example 6 | 4:1 | 1 | 0.01 | 100:1 | 15.7 | 88.5 |
| Example 7 | 4:1 | 1 | 0.1 | 10:1 | 15.2 | 87.2 |
| Example 8 | 4:1 | 1 | 0.15 | 6.67:1 | 17.7 | 83.8 |
| Comparative Example 5 | 1:1 | 1 | 0.05 | 20:1 | 18.2 | 81.0 |
| Comparative Example 6 | 4:1 | 1 | 0.5 (Particle-type carbon black) | 2:1 | 19.7 | 78.2 |

As shown in Table 1, Examples 1 to 8 using lithium titanium oxide with an aspect ratio of 10:1 to 2:1, exhibited low charge transfer resistance and excellent chargeability.

Comparative Example 1, which did not include lithium titanium oxide and carbon nanotube, exhibited high charge transfer resistance and low chargeability and Comparative Example 2 in which lithium titanium oxide with an aspect ratio of 4:1 was used and carbon nanotube was not used, and Comparative Example 4 in which lithium titanium oxide was not used, and carbon nanotube was only used, also showed high charge transfer resistance and low chargeability.

Even although lithium titanium oxide and carbon nanotube were used, Comparative Examples 3 and 6, in which an aspect ratio of lithium titanium oxide was outside of 10:1 to 2:1, showed high charge transfer resistance and low chargeability.

Even if lithium titanium oxide with an aspect ratio of 4:1 was used, Comparative Example 6 using a particle-type carbon black rather than the needle-type carbon-based material exhibited very high charge transfer resistance and low chargeability.

While this disclosure has been described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

1. A negative electrode for a rechargeable lithium battery, comprising:
lithium titanium oxide with an aspect ratio of about 10:1 to about 2:1;
a needle-type carbon-based material; and
a negative active material.

2. The negative electrode for a rechargeable lithium battery of claim 1, wherein the lithium titanium oxide is represented by Chemical Formula 1.
[Chemical Formula 1] Li₄₊ₓTi_{y}M_{z}Ot
wherein, in Chemical Formula 1, 0≤x≤3, 1≤y≤5, 0≤z≤3, 3≤t≤12, and
M is selected from Mg, La, Tb, Gd, Ce, Pr, Nd, Sm, Ba, Sr, Ca, or combinations thereof.

3. The negative electrode for a rechargeable lithium battery of claim 1 or claim 2, wherein the needle-type carbon-based material includes carbon nanotube, carbon nano fiber, or combinations thereof.

4. The negative electrode for a rechargeable lithium battery of any one of claims 1 to 3, wherein the needle-type carbon-based material has an average length of about 0.5 µm to about 20 µm.

5. The negative electrode for a rechargeable lithium battery of any one of claims 1 to 4, wherein a mixing ratio of lithium titanium oxide and the needle-type carbon-based material is about 2:1 to about 199:1 by weight ratio.

6. The negative electrode for a rechargeable lithium battery of any one of claims 1 to 4, wherein a mixing ratio of lithium titanium oxide and the needle-type carbon-based material is about 2:1 to about 100:1 by weight ratio.

7. The negative electrode for a rechargeable lithium battery of any one of claims 1 to 6, wherein the negative active material includes a silicon-based active material, a carbon-based active material, or combinations thereof.

8. A rechargeable lithium battery, comprising:
a negative electrode of any one of claims 1 to 7;
a positive electrode; and
an electrolyte.
